# EUROPÄISCHE PATENTANMELDUNG

(11) **EP 2 050 670 A2**
(43) Veröffentlichungstag der Anmeldung: **22.04.2009**
(21) Anmeldenummer: 08003176.8
(22) Anmeldetag: 21.02.2008
(51) Int. Cl.: B64C 11/40, B63H 3/08

(54) **Elektro-Hydraulischer Propellerregler**

(30) Priorität: 11.01.2008 DE 102008004196
(71) Anmelder: MT-Propeller Entwicklung GmbH, 94348 Atting (DE)
(72) Erfinder: Mühlbauer, Gerd, 94360 Mitterfels (DE)
(74) Vertreter: Grünberg, Thomas

(57) **Zusammenfassung**

Es wird eine hydraulisch verstellbare Propellereinheit für Luft-, Land- oder Wasserfahrzeuge vorgeschlagen, umfassend ein Triebwerk, eine Triebwerkssteuerung und einen umlaufenden Propeller mit mindestens zwei Propellerblättern (16), deren Anstellwinkel mittels einer feststehenden Steuereinheit (30) einstellbar ist, die mit dem umlaufenden Propeller (10) über mindestens eine Hydraulikleitung in Verbindung steht und ein Gehäuse (32) aufweist, in dem ein Steuerschieber (46) angeordnet ist, dessen Stellung durch das Zusammenwirken von mittels des Triebwerks rotierend angetriebenen Fliehgewichten (40) und einer hinsichtlich ihrer Vorspannung einstellbaren Reglerfeder (48) bestimmt wird, welche sich an dem Steuerschieber (46) abstützt. Erfindungsgemäß umfasst der Propellerregler (30) einen Elektromotor (58), der die Vorspannung der Reglerfeder (48) einstellt und mit der Triebwerksteuerung elektrisch verbunden ist.

## Beschreibung

Die Erfindung betrifft eine hydraulisch verstellbare Propellereinheit für Luft-, Land- oder Wasserfahrzeuge mit den Merkmalen des Oberbegriffs des Patentanspruchs 1.

Eine derartige Propellereinheit ist aus der Praxis bekannt und umfasst ein Triebwerk zum Antrieb eines Propellers mit mindestens zwei Propellerblättern, deren Anstellwinkel einstellbar ist. Dies erfolgt mittels einer feststehenden Steuereinheit, die mithin einen Propellerregler bildet und die eine hydraulische Einrichtung ist, mittels der die Propellerblätter angepasst an den jeweiligen Betriebsmodus hinsichtlich ihres Anstellwinkels verstellt werden können. Bisherige Propellerregler weisen einen Einstellarm auf, der zum Verstellen eines Steuerschiebers auf eine Reglerfeder wirkt, die sich an dem Steuerschieber abstützt. Die Stellung des Steuerschiebers gibt den Druck vor, der auf einen Stellkolben zur Verstellung des Anstellwinkels der Propellerblätter wirkt. Der Einstellarm des Propellerreglers ist in mechanischer Weise mit einem Bedienhebel verbunden, der im Cockpit des betreffenden Flugzeugs angeordnet ist und von dem Piloten bedient werden muss. Dies bedeutet, dass der Pilot die Propellerdrehzahl vorgibt. Bisherige Propellerregler arbeiten also in mechanisch-hydraulischer Weise, wobei deren Ansteuerung mechanisch erfolgt.

Bei modernen Triebwerken für Propeller wird häufig eine elektronische Steuerung der Leistung und der Drehzahl gefordert, deren Einstellung in Abhängigkeit von verschiedenen Parametern erfolgen muss, um eine optimale, für einen bestimmten Betriebszustand erforderliche Leistung zu erzielen. Dies ist aber mit bisherigen, in mechanisch-hydraulischer Weise arbeitenden Propellerreglern nicht möglich.

Der Erfindung liegt die Aufgabe zugrunde, eine hydraulisch verstellbare Propellereinheit der einleitend genannten Gattung bereit zu stellen, die mit einem Propellerregler versehen ist, welcher eine hinsichtlich Bedienungskomfort optimierte Ansteuerung der Propellereinheit ermöglicht.

Diese Aufgabe ist erfindungsgemäß durch die hydraulisch verstellbare Propellereinheit mit den Merkmalen des Patentanspruchs 1 gelöst.

Gemäß der Erfindung wird mithin eine hydraulisch verstellbare Propellereinheit für Luft-, Land- oder Wasserfahrzeuge bereitgestellt, welche ein Triebwerk, eine Triebwerkssteuerung und einen umlaufenden Propeller mit mindestens zwei Propellerblättern umfasst, deren Anstellwinkel mittels einer feststehenden Steuereinheit einstellbar ist, die mit dem umlaufenden Propeller über eine Hydraulikleitung in Verbindung steht und ein Gehäuse aufweist, in dem ein Steuerschieber zur Einstellung eines auf die Propellerblätter wirkenden Hydraulikdrucks angeordnet ist, dessen Stellung durch das Zusammenwirken von mittels des Triebswerks angetriebenen Fliehgewichten und einer hinsichtlich ihrer Vorspannung einstellbaren Reglerfeder bestimmt wird, welche sich an dem Steuerschieber abstützt. Der Propellerregler umfasst einen Elektromotor, der die Vorspannung der Reglerfeder einstellt und mit der Triebswerksteuerung elektrisch verbunden ist.

Durch die erfindungsgemäße Ausbildung einer Propellereinheit kann auf eine permanente, mechanische Verbindung zwischen einem Bedienhebel im Cockpit und der üblicherweise an einem Triabwerksgehäuse montierten Steuereinheit verzichtet werden. Vielmehr kann die Einstellung der Reglerfeder und damit die Einstellung des auf die Propellerblätter wirkenden Hydraulikdrucks durch die in der Regel digital arbeitende, elektronische Triebwerkssteuerung (FADEC) vorgegeben werden. Steuerbefehle der Triebwerkssteuerung werden also von dem Elektromotor in eine Betätigung der Steuereinheit bzw. des Propellerreglers umgesetzt. Dies erhöht den Bedienkomfort eines Flugzeugs in beträchtlicher Weise, da eine so genannte Einhebelbedienung des betreffenden Luft-, Land- oder Wasserfahrzeugs möglich ist. Der Flugzeug- bzw. Fahrzeugführer wird also entlastet.

Durch die erfindungsgemäße Auslegung der den Propellerregler darstellenden Steuereinheit ist eine vollelektronische Steuerung des Propellers möglich, so dass auch der Treibstoffverbrauch bezogen auf die jeweils gewählte Triebwerksleistung optimiert gestaltet werden kann. Im Bereich von Luftfahrzeugen fließen hierbei verschiedene Parameter, wie Luftdichte, Außentemperatur und Fluggeschwindigkeit ein. Auch die Drehzahlen von Triebwerk und Propeller spielen eine bedeutende Rolle. Diese Drehzahlen können unterschiedlich sein.

Bei einer speziellen Ausführungsform der Propellereinheit nach der Erfindung wirkt der Elektromotor über einen Hebelarm auf einen Lagerblock für die Reglerfeder. Mittels des Hebelarms kann eine Übersetzung oder Untersetzung der von dem Elektromotor ausgeübten, insbesondere linearen Stellbewegung erfolgen. In diesem Falle liegt also eine mechanische Einrichtung vor, die Steuerbefehle aus der elektronischen Triebwerkssteuerung über den Elektromotor auf die vorgespannte Reglerfeder überträgt, welche für die Drehzahlregelung des Propellers verantwortlich ist und in Abhängigkeit von der Vorspannung unterschiedliche Drehzahlen zulässt.

Zur flexiblen Montage der Steuereinheit im Bereich eines Triebwerkgehäuses kann diese einen drehbaren Kopf aufweisen, an dem der Elektromotor und der Hebelarm ausgebildet sind.

Um die Drehzahl des Propellers auf eine maximale und/oder eine minimale Drehzahl begrenzen zu können, ist es vorteilhaft, wenn der Hebelarm mit mindestens einem Anschlag zusammenwirkt, der die minimale und/oder die maximale Drehzahl des Propellers festlegt. Die Anschläge für den Hebelarm gewährleisten also, dass im Falle eines Versagens der Steuerelektronik des Triebwerks keine gefährlichen Überdrehzahlen oder Unterdrehzahlen auftreten.

Vorzugsweise sind die Anschläge einstellbar ausgebildet. Insbesondere können die Anschläge jeweils von einer Anschlagschraube gebildet sein, die ein Kopfgehäuse durch - greift, in dem der Hebelarm angeordnet ist. Vorzugsweise sind die Anschlagschrauben mit einer Verdrehsicherung versehen, die ein ungewolltes Verstellen des jeweiligen Anschlags verhindert. Durch die Anschlagschrauben können die Grenzwerte für die Drehzahl des Propellers von der Außenseite der Steuereinheit eingestellt werden, ohne dass das Gehäuse der Steuereinheit geöffnet werden muss.

Der Elektromotor ist vorzugsweise ebenfalls an dem Kopfgehäuse befestigt, welches den Hebelarm aufnimmt.

Um bei einem insbesondere mehrmotorigen Flugzeug die Propellerblätter in einfacher Weise beispielsweise bei abgeschaltetem Triebwerk in die so genannte Segelstellung, das heißt in die Stellung mit dem geringsten Luftwiderstand, verstellen zu können, weist die Steuereinheit der Propellereinheit nach der Erfindung vorzugsweise ein Magnetventil auf, bei dessen Öffnen der auf einen Verstellkolben für die Propellerblätter wirkende Hydraulikdruck abfällt, so dass das System im Wesentlichen drucklos ist und sich die Propellerblätter aufgrund der Wirkung von Federn und Fliehgewichten selbsttätig in die Segelstellung verdrehen. Bei einer Rückstellung aus der Segelstellung wird dieses Magnetventil geschlossen.

Um beispielsweise im Flug zum Anlassen des Triebwerks ausgehend von einer Segelstellung stets einen hinreichenden Hydraulikdruck bereitstellen zu können, ist es vorteilhaft, wenn die Propellereinheit nach der Erfindung einen Ölakkumulator mit einem weiteren Magnetventil umfasst, das mit der Steuereinheit in Verbindung steht, so dass bei einem Öffnen dieses Magnetventils die Propellerblätter in Richtung eines kleineren Anstellwinkels verstellt werden. Damit wird ein zuverlässiger Triebswerksstart im Flug ermöglicht.

Bei einem mehrmotorigen Luft-, Land- oder Wasserfahrzeug kann es gewünscht sein, eine Synchronisierung der Drehzahl der Propellerblätter zu erreichen. Diese kann über eine elektronische Triebwerkssteuerung erfolgen, welche mit den Elektromotoren bzw. Servomotoren der den einzelnen Propellern zugeordneten Steuereinheiten der vorstehend beschriebenen Art in Verbindung steht und welche die elektronische Triebwerksregelung (FADEC) oder eine externe, elektronische Regeleinheit ist.

Weitere Vorteile und vorteilhafte Ausgestaltungen des Gegenstandes der Erfindung sind in der Beschreibung, der Zeichnung und den Patentansprüchen zu entnehmen.

Ein Ausführungsbeispiel einer hydraulisch verstellbaren Propellereinheit nach der Erfindung ist in der Zeichnung schematisch vereinfacht dargestellt und wird in der nachfolgende Beschreibung näher erläutert. Es zeigt:
- Fig. 1: einen Längsschnitt durch einen Propellernabenbereich;
- Fig. 2: eine erste Seitenansicht eines Propeller-reglers zur Einstellung eines Propeller-blattanstellwinkels;
- Fig. 3: eine zweite Seitenansicht des Propellerreglers; und
- Fig. 4: einen Längsschnitt durch den Propellerregler.

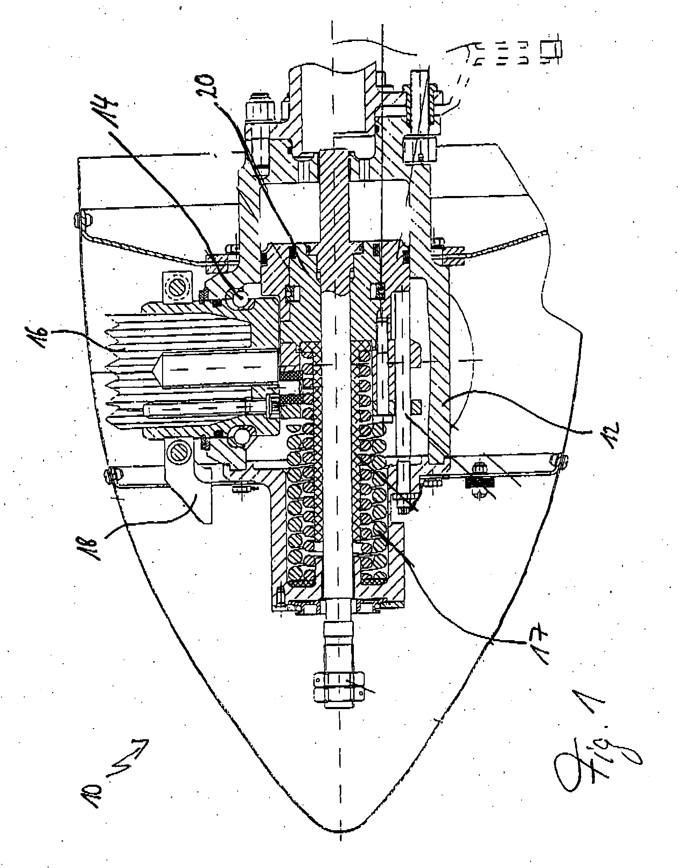

In Fig. 1 ist ein hydraulisch verstellbarer Verstellpropeller dargestellt, der eine Propellernabe 12 und mindestens zwei Propellerblätter 16 mit jeweils zugeordneten Lagerungen 14 aufweist. An den Propellerblättern 16 ist jeweils ein Fliehgewicht 18 angeordnet, das das betreffende Propellerblatt 16 zusammen mit Federn 17 in Richtung Segelstellung verstellt. Zum umlaufenden Antrieb des Propellers 10 ist die Nabe 12 mit einem Triebwerk des betreffenden Flugzeugs oder Fahrzeugs verbunden.

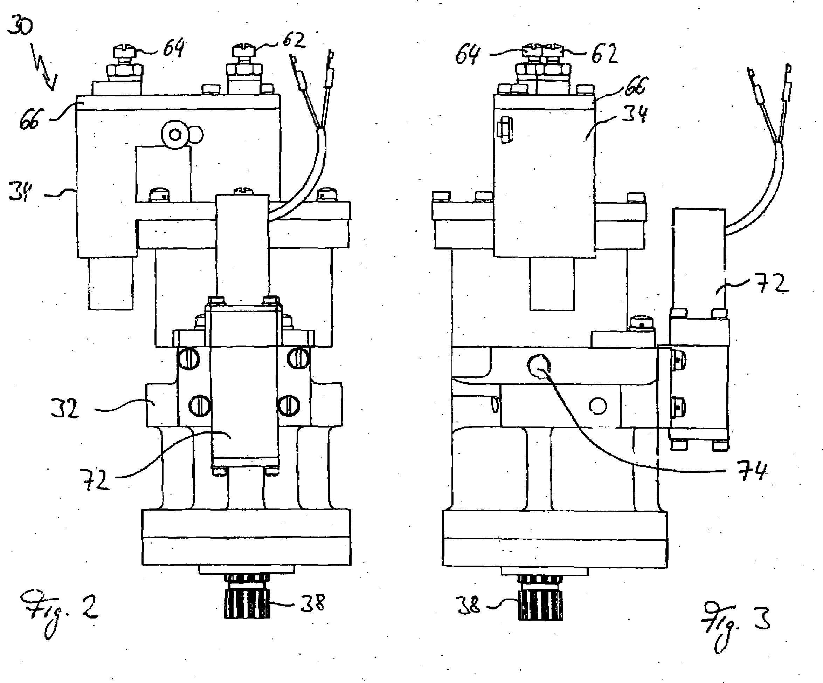

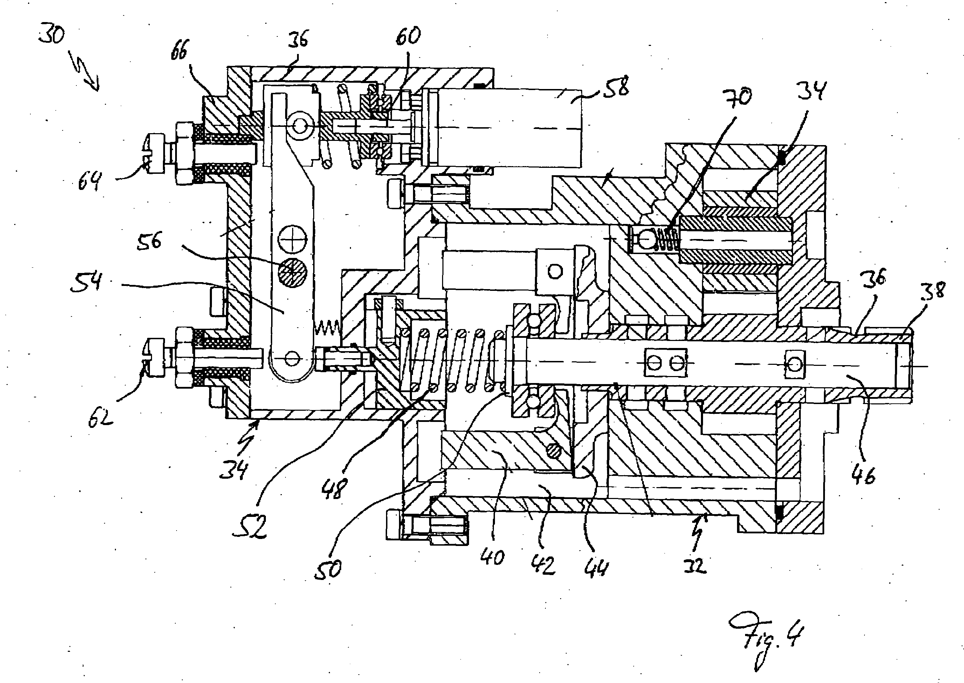

In der Propellernabe 12 ist des Weiteren ein Servokolben 20 angeordnet, mittels dessen die Propellerblätter 16 hinsichtlich ihres Anstellwinkels verstellt werden können. Der Versatz des Servokolbens 20 erfolgt in hydraulischer Weise, wozu ein Zylinderraum, in dem der Kolben 20 geführt ist, über eine nicht näher dargestellte Hydraulikleitung mit einem als Steuereinheit dienenden Propellerregler 30 verbunden ist, welcher in den Figuren 2 bis 4 detailliert dargestellt ist.

Der Propellerregler 30 umfasst ein aus Metall gefertigtes Gehäuse 32, auf das ein Reglerkopf 34 mit einem Kopfgehäuse 36 aufgesetzt ist. In dem Reglergehäuse 32 ist eine Zahnradpumpe 34 angeordnet, mit welcher Hydrauliköl, das von dem Triebwerk herangeführt wird, unter einen maximalen Servodruck von 18 bis 42 bar gesetzt werden kann. Zur Einstellung des Anstellwinkels der Propellerblätter 16 wird der Kolben 20 mit dem Servodruck beaufschlagt.

Des Weiteren ist in dem Reglergehäuse 32 eine Hohlwelle 36 angeordnet, die über ein Kupplungselement 38 von dem Triebwerk angetrieben ist und welche Fliehgewichte 40 antreibt, welche in einem Reglerraum 42 angeordnet sind. Die Fliehgewichte 40 sind schwenkbar auf einem Drehteller 44 gelagert, welcher mit der Hohlwelle 36 verbunden ist.

In der Hohlwelle 38 ist ein Ventilschieber bzw. Steuerschieber 46 axial verschiebbar geführt, durch dessen Steuerstellung der zu dem Kolben 20 in der Nabe 12 des Propeller 10 geführte Servodruck eingestellt wird.

An seinem dem Kupplungsstück 38 abgewandten Ende ist der Steuerschieber 46 mittels einer Reglerfeder 48 vorgespannt. Die Reglerfeder 48 stützt sich mit einem Ende an einem Auflager 50, das mit dem Steuerschieber 46 verbunden ist, und mit ihrem anderen Ende an einer Lagerhülse 52 ab, deren Position die Vorspannung der Reglerfeder 48 vorgibt.

Die Lagerhülse 52, die in dem Reglerkopf 34 ausgebildet ist, ist mit einem Hebelarm 54 verbunden, der an einer Achse 56 schwenkbar gelagert ist und der mittels eines an dem Reglerkopf 34 montierten Elektromotors 58 geschwenkt werden kann. Der Servomotor 58, der mit einer Triebwerkssteuerung in Verbindung steht, hat eine axial versetzbare bzw. translatorisch arbeitende Welle 60, welche auf den Hebelarm 54 wirkt und so durch dessen Verschwenken einen Versatz der Lagerhülse 52, an der sich die Reglerfeder 48 abstützt, bewirken kann.

An dem Reglerkopf 34 sind des Weiteren zwei Einstellschrauben 62 und 64 vorgesehen, die einen Deckel 66 des Reglerkopfs 34 durchgreifen und von denen die Einstellschraube 62 einen mechanischen Anschlag für den Hebel 54 bildet, der eine minimale Drehzahl des Propellers 10 festlegt, und die Einstellschraube 64 einen mechanischen Anschlag für den Hebelarm 54 bildet, der eine maximale Drehzahl des Propellers definiert, oder umgekehrt.

In dem Reglergehäuse 32 ist des Weiteren ein Überdruckventil 70 ausgebildet, welches auf einen Grenzdruck zwischen 18 und 42 bar eingestellt werden kann und im Falle eines Überdrucks in dem Propellerregler 30 öffnet und Hydrauliköl abführt.

Des Weiteren ist an dem Propellerregler 30 ein Magnetventil ausgebildet, das die zu dem Kolben 20 führende Hydraulikleitung drucklos schalten kann, so dass sich die Propellerblätter 16 durch die Wirkung der an diesen angeordneten Fliegewichte und der Federn 17 selbsttätig in die Segelstellung verstellen.

An einer Seitenwand des Gehäuses 32 ist des Weiteren ein Anschluss 74 vorgesehen, durch welchen ein Ölakkumulator nachgeschaltet sein kann, der mit einem weiteren Magnetventil versehen ist und mittels dessen die Propellerblätter 16 aus der Segelstellung zurück in eine Betriebsstellung verstellt werden können. Es steht mithin beim 'Öffnen dieses Magnetventils ein Hydraulikdruck zur Verfügung, der den Kolben 20 in der Nabe 12 des Propellers 10 verstellen kann.

Die beschriebene Steuereinheit kann natürlich auch für Propeller eingesetzt werden, bei denen keine Segelstellung der Propellerblätter möglich ist.

## Patentansprüche

1. Hydraulisch verstellbare Propellereinheit für Luft-, Land- oder Wasserfahrzeuge, umfassend ein Triebwerks, eine Triebwerkssteuerung und einen umlaufenden Propeller mit mindestens zwei Propellerblättern (16), deren Anstellwinkel mittels einer feststehenden Steuereinheit (30) einstellbar ist, die mit dem umlaufenden Propeller (10) über mindestens eine Hydraulikleitung in Verbindung steht und ein Gehäuse (32) aufweist, in dem ein Steuerschieber (46) angeordnet ist, dessen Stellung durch das Zusammenwirken von mittels des Triebwerks rotierend angetriebenen Fliehgewichten (40) und einer hinsichtlich ihrer Vorspannung einstellbaren Reglerfeder (48) bestimmt wird, welche sich an dem Steuerschieber (46) abstützt,
**dadurch gekennzeichnet, dass** der Propellerregler (30) einen Elektromotor (58) umfasst, der die Vorspannung der Reglerfeder (48) einstellt und mit der Triebwerksteuerung elektrisch verbunden ist.

2. Hydraulisch verstellbare Propellereinheit nach Anspruch 1, **dadurch gekennzeichnet, dass** der Elektromotor (58) über einen Hebelarm (54) auf einen Lagerblock (52) für die Reglerfeder (48) wirkt.

3. Hydraulisch verstellbare Propellereinheit nach Anspruch 2, **dadurch gekennzeichnet, dass** der Hebelarm (54) mit mindestens einem Anschlag (62,64) zusammenwirkt, der eine minimale und/oder eine maximale Drehzahl des Propellers festlegt.

4. Hydraulisch verstellbare Propellereinheit nach Anspruch 3, **dadurch gekennzeichnet, dass** der Anschlag (62,64) von einer Anschlagschraube gebildet ist, die ein Kopfgehäuse (36) durchgreift, in dem der Hebelarm (54) angeordnet ist.

5. Hydraulisch verstellbare Propellereinheit nach einem der Ansprüche 1 bis 4, **dadurch gekennzeichnet, dass** der Elektromotor (58) an dem Kopfgehäuse (36) befestigt ist.

6. Hydraulisch verstellbare Propellereinheit nach einem der Ansprüche 1 bis 5, **gekennzeichnet durch** ein Magnetventil, bei dessen Öffnen die Propellerblätter (16) in eine Segelstellung gestellt werden.

7. Hydraulisch verstellbare Propellereinheit nach einem der Ansprüche 1 bis 6, **gekennzeichnet durch** ein Magnetventil, das mit einem Ölakkumulator in Verbindung steht, so dass bei einem Öffnen dieses Magnetventils die Propellerblätter (16) in Richtung eines kleineren Anstellwinkels verstellt werden.

8. Hydraulisch verstellbare Propellereinheit nach einem der Ansprüche 1 bis 7 für ein mit mindestens zwei Propeller (10) ausgestattetes Luft-, Land- oder Wasserfahrzeug, welche Propeller jeweils mit einem elektrisch gesteuerten Propellerregler (30) verbunden sind, der zur Betätigung mit einem Elektromotor (58) versehen ist, wobei eine Synchronisierung der Propeller (10) mittels einer Steuereinrichtung erfolgt, die die Elektromotoren (58) der Propellerregler (30) ansteuert.
